Europäisches Patentamt

(19) European Patent Office

Office européen des brevets

(11) Publication number: **0 227 886 B1**

# EUROPEAN PATENT SPECIFICATION

(12)

(45) Date of publication of patent specification :
**02.01.91 Bulletin 91/01**

(51) Int. Cl.⁵ : **D01F 6/62, D01F 1/10**

(21) Application number : **86111161.5**

(22) Date of filing : **12.08.86**

(54) **Fiber having high density and roughened surface.**

(30) Priority : **04.09.85 JP 197042/85**

(43) Date of publication of application :
**08.07.87 Bulletin 87/28**

(45) Publication of the grant of the patent :
**02.01.91 Bulletin 91/01**

(84) Designated Contracting States :
**DE FR GB IT**

(56) References cited :
**DE-A- 1 962 250**
**DE-A- 2 705 210**
**FR-A- 1 447 652**
**FR-A- 1 546 544**
**GB-A- 1 040 605**
**GB-A- 2 016 364**
**PATENT ABSTRACTS OF JAPAN, vol. 5, no.
178 (C-78)[850], 14th November 1981; &
JP-A-56 101 913 (TORAY K.K.) 14-08-1981**

(73) Proprietor : **KURARAY CO., LTD.
1621 Sakazu
Kurashiki-City Okayama Prefecture 710 (JP)**

(72) Inventor : **Maeda, Katsura
5 Block 11, 1625 Sakazu, Kurashiki City
Okayama Prefecture (JP)**
Inventor : **Akagi, Takao
2632-1 Sakazu, Kurashiki City
Okayama Prefecture (JP)**
Inventor : **Sato, Masanori
5-4-5 Kofu-Dai, Toyono-Cho, Toyono-Gun
Osaka Prefecture (JP)**
Inventor : **Yamaguchi, Shinji
1660-6 Sakazu, Kurashiki City
Okayama Prefecture (JP)**

(74) Representative : **Strehl, Schübel-Hopf,
Groening
Maximilianstrasse 54 Postfach 22 14 55
D-8000 München 22 (DE)**

## Description

### BACKGROUND OF THE INVENTION

#### 1. Field of the Invention :

The present invention relates to a polyester fiber the woven fabrics and knitted fabrics of which provide good drape and silhouette comparable to or better than rayon fabrics.

#### 2. Description of the Prior Art :

Polyester fiber has become predominant in the synthetic fibers for garment use because of its outstanding fundamental properties such as wash-and-wear, heat setting, and easy care, and also as a result of continued improvement on the raw materials and processing technology.

However, polyester fiber,is inferior in feel and hand to natural fibers because of the excessive smoothness of the fiber surface. A variety of techniques have heretofore been proposed to overcome this disadvantage.One method consist in incorporrating fine-divided, insert particles into the fibers, thus causing a roughened surface. Such inert particles may be terephthalate salts of calcium, barium, cadmium Zincandmanganese (GB-A-1040605), or kaolinite, potassium acetate and potassium -3,5- di (carbonethoxy) benzenesulfonate (FR-A-1546544). Nevertheless, there are still many problems unsolved regarding the drape and silhouette the woven fabrics and knitted fabrics of polyester fiber produce.

Conventional means to improve the polyester woven fabrics and knitted fabrics in drape are to lower the diameter of the fiber or to increase the alkali-soluble matter in the woven fabrics and knitted fabrics. According to these means, the flexural rigidity and shear rigidity of polyester fiber are reduced and this leads to an improved drape of woven fabrics and knitted fabrics. On the other hand, the reduction of rigidity makes the fabrics less stiff to such an extent that these conventional means are of no practical use. FR-A-1.447.652 teaches to optimise the ratio of flexibility to rigidity by incorporating fine-divided barium-sulfate-and/or titaniumdioxide-particles into the polyester fibers.

Incorporating fine-divided inorganic particles, i.e. silicon, oxides of aluminium, thonium, zirconium or group (II)metals or a salt there of into fibers is also useful for the improvement of color developing properties (JP-A-56101913). GB-A-2016364 discloses a process for imparting surface irregularities to polyester fibres in order to improve the feeling and handle of the fibres as a whole, wherein silica particles are incorporated into the fibres.

### SUMMARY OF THE INVENTION

Accordingly, it is an object of the present invention to provide a polyester fiber the woven fabrics and knitted fabrics of which exhibit good drape and silhouette.

This invention is a result of our intensive research into a polyester fiber which can be made into woven fabrics and knitted fabrics having good drape and silhouette as well as good stiffness, hand, and gloss comparable to those of natural fibers. Our research led to the finding that the above-mentioned object is achieved by a polyester fiber having a high density and roughened surface.

### BRIEF DESCRIPTION OF THE DRAWINGS

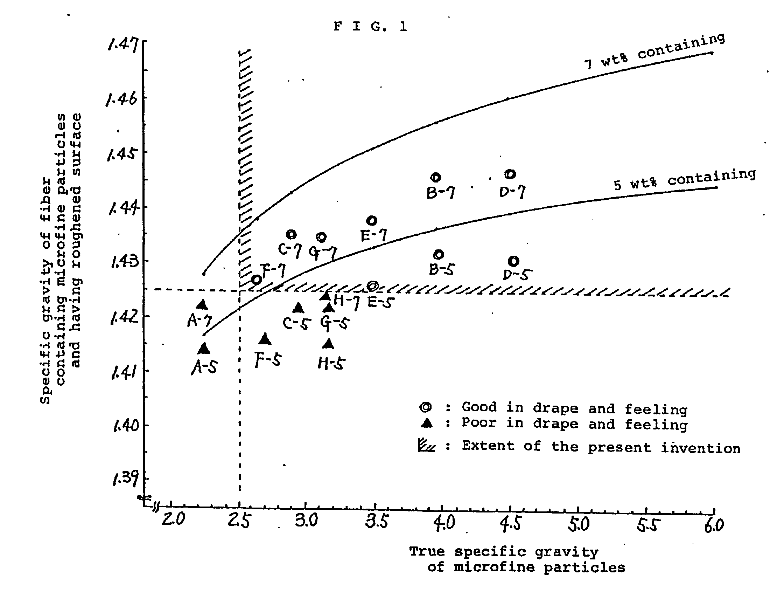

Fig. 1 is a graph showing the relationship between the specific gravity of fiber containing microfine particles and having roughened surface and the true specific gravity of microfine particles.

### DETAILED DESCRIPTION OF THE INVENTION

The specific gravity of a synthetic polymer depends almost entirely on the skeleton of the molecular chain and the manner in which its crystallization takes place. Therefore, in the case of polyester fiber, it is only possible to change the specific gravity of polymer in the limited range of 1.36 to 1.41. One conceivable way of increasing the specific gravity of a polymer is to incorporate the polymer with microfine particles having a specific gravity higher than that of the polymer. However, merely increasing the specific gravity of a fiber does not lead to improved feeling and handle of the fiber. For improved feeling and handle, it is necessary to impart minute recesses and projections to the surface of the fiber. These surface irregularities delicately change the coefficient of static and dynamic friction between fibers, improving the feeling and handle of the fibers as a whole.

There are several known roughening methods for imparting surface irregularities to the polyester fiber for the improvement of feeling and handle. The surface roughening technique, however, is difficult to perform. In cases where the recesses and projections formed on the fiber surface are large, the fiber gives a whitish pastel shade when the woven fabrics and knitted fabrics of the fiber are dyed. In cases where the recesses and projections on the fiber surface are extremely small in the order of wavelengths of light, they produce the color deepening effect or they cause the dyed product to have a depth of color.

However, such extremely small surface irregularities are partly broken when the fabrics are rubbed with each other in the dyeing process, and such parts look whitish as compared with normal parts. This uneven appearance diminishes the commercial value of fabrics. In other words, the surface irregularities for the improvement of feeling and handle of polymer fiber should be made in such a way that the woven fabrics and knitted fabrics made of the fiber do not give a whitish pastel shade when dyed. Moreover, extremely small irregularities are preferable from the standpoint of color deepening effect but they should be resistant to damage by rubbing.

Our research into this subject led to the finding that the specific gravity of polyester fiber can be increased and, at the same time, the feeling and handle of polyester fiber can be improved only when the polyester fiber is incorporated with microfine particles having a high specific gravity and, at the same time, the polyester fiber incorporated with the microfine particles are given surface irregularities of proper magnitude and density. It was also find that the microfine particles and surface irregularities should satisfy the following conditions according to this invention.

The microfine particles having a specific gravity higher than that of polyester polymer should have a true specific gravity higher than 2.5, preferably higher than 3.5, an average particle diameter smaller than 1 μm, and a refractive index lower than 2.0. When polyester fiber is incorporated with more than 4 wt% of the microfine particles, the polyester fiber is given a high specific gravity and is improved in feeling and handle.

The effect produced by increasing the specific gravity of fibers varies depending on the weight of cloth and the textile weave. If woven fabrics and knitted fabrics of polyester fibers are to give the drape and silhouette as rayon cloths do, the polyester fiber should have a specific gravity higher than 1.425, preferably higher than 1.44. However, with a specific gravity higher than 1.60, polyester fiber is too heavy and poor in feeling and handle, therefore the amount of microfine particles incorporated into the fiber should not excent 20 wt%.

In this invention the specific gravity of the fiber is measured by the density gradient tube method at 25°C, and the fibers used for measuring the specific gravity are oriented fibers and heat set fibers. The oriented fibers are prepared by drawing in the usual manner spun yarns at a rate of 0.65 to 0.75 of the maximum draw ratio, followed by heat treatment at 170 to 190°C for 10 to 60 seconds. The heat set fibers are obtained from fabrics which have undergone heat setting or from false twist yarns which have undergone heat setting.

The microfine particles to be incorporated in the polyester fiber should have a refractive index lower than 2.0, preferably lower than 1.75, which is close to that of the polyester fiber. With microfine particles having a refractive index greater than this value, the dyed fabrics of the fiber incorporated with them look whitish because they scatter light. In addition, the microfine particles should have an average particle diameter smaller than 1 μm. Particles greater than this limit are liable to form large recesses on the fiber surface during the surface roughening process, and large recesses imparts a pastel shade to dyed fabrics.

In the next step, the polyester fiber incorporated with microfine particles as mentioned above is treated with a solution capable of etching the polymer substrate. A solution of sodium hydroxide used for alkali treatment is adequate.

The microfine particles are not necessarily required to be soluble in the etching solution ; rather they should preferably be inert to the etching solution so that the formation of extremely small irregularities is avoided when the fiber surface is roughened. Etching takes place in the vicinity of each microfine particle where the polymer is not sufficiently oriented. The recess thus formed by etching has a length in the direction of the fiber axis and a breadth in the direction perpendicular to the fiber axis.

The length of each recess should be smaller than 10 μm but preferably greater than 2 μm, and the breadth of each recess should be greater than 0.3 μm but preferably smaller than 2 μm. The density of recesses should be 5 to 100 per 100 square micrometres. The surface irregularities specified above impart good feeling and handle to the woven fabrics and knitted fabrics of the polyester fiber having them. Such irregularities are less liable to damage in the dyeing process and hence keep the woven fabrics and knitted fabrics from producing a pastel shade or becoming whitish and help the woven fabrics and knitted fabrics to produce good drape and silhouette.

Recesses longer than 10 μm or wider than 2 μm give rise to a pastel shade. Recesses narrower than

0.3 μm and denser than 100 per 100 square micrometres are liable to damage. Thus, they are not desirable in this invention.

When woven fabrics or knitted fabrics are made of the polyester fibers having surface irregularities as specified above, they have good feeling and handle, without waxy feeling, like those of rayon. If they are treated with a proper finish, they feel like natural fibers such as silk and wool. In addition, the increased specific gravity greatly contributes to the improvement in drape and silhouette.

The fiber of this invention having a high specific gravity and roughened surface may be obtained by incorporating microfine particles into the polymer when the polymer is being produced. Alternatively, it is also possible to cause microfine particles to separate out during the polymer synthesis or to disperse microfine particles into the molten polymer by the aid of proper vehicle. These methods are not limitative.

Examples of the inert microfine particles having a refractive index lower than 2.0 and a true specific gravity higher than 2.5 include alumina, zircon, barium sulfate, calcium carbonate, magnesium oxide, aluminum phosphate, and calcium phosphate. They should have an average particle diameter smaller than 1 μm, and they should be added in an amount more than 4 wt% so that the fiber incorporated with them have a specific gravity greater than 1.425. If the content is low, the fiber does not have the desired specific gravity. It was empirically concluded from the tests with a variety of microfine particles that it is necessary to add at least 4 wt% for the desired results. The specific gravity of the fiber increases in proportion to the amount of microfine particles added ; however, the addition in excess of 30 wt% adversely affects the spinnability. The specific gravity of the fiber should be lower than 1.60 so that the fabrics made from it have good feeling and handle ; therefore the amount of microfine particles added should not exceed 20 wt%.

The polyester fiber incorporated with microfine particles is treated with an etching solution for surface roughening as mentioned above. The incorporation of specific microfine particles increases the specific gravity of the polyester fiber and the etching treatment imparts minute irregularities to the surface of the polyester fiber.

The polyester fiber of this invention may be composed entirely of polyester incorporated with microfine particles having a high specific gravity. Alternatively, it may be skin-core conjugate fiber in which the sheath is composed of polyester incorporated with microfine particles and the core is composed of other polyester. Further, the composite polyester fiber of side-by-side type can also be used. In the case of composite polyester fiber, the counter component may contain a metal (such as lead) or metal oxide having a high specific gravity or may be a high-density polymer such as polyvinylidene chloride.

Among the above-mentioned microfine particles, barium sulfate is most preferable because it imparts a high specific gravity to the polyester fiber and, at the same time, it helps form the desired surface irregularities.

The polyester fiber of this invention can be used to make a part or all of the fabrics. In addition, it can be used in the form of filaments and staples. It can also be used in the form of monofilaments. The staples may be used alone or mixed with other fibers.

The polyester fiber of this invention is composed of polyester polymer in which polyethylene terephthalate accounts for more than 75% of the constituents. The polyester polymer may contain commonly used additives such as antistatic agent, antioxidant, delustering agent, dye and pigment, and flame retardant.

The invention is further illustrated by the following examples, which are not to be construed as limiting the present invention.

## EXAMPLE 1

Ethylene glycol and barium sulfate (having an average particle diameter of 0.58 μm, a refractive index of 1.64, and a true specific gravity of 4.49, in 60% paste in water) were mixed in equal quantities (by weight). For complete dispersion, the mixture was stirred by using a vibration mill (Model MB-1, made by San-ei Seisakusho) for 10 hours. The ethylene glycol containing barium sulfate was mixed with tere-phthalic acid and ethylene glycol in such quantities that the molar ratio of ethylene glycol to terephthalic acid is 1.5 and the content of barium sulfate in the polymer is 2 wt%, 4 wt%, 5 wt%, 7 wt%, 10 wt%, 20 wt%, and 30 wt%. After the addition of 400 ppm of $Sb_2O_3$, each mixture in the slurry form was fed over 2.5 hours to the esterification vessel kept at an internal temperature of 240°C. The reaction mixture was heated to 270°C over 40 minutes to complete the reaction. The reaction product was transferred to the polymerization vessel kept a an internal temperature of 290°C. The vessel was gradually evacuated to $1.3.10^{-3}$ bar (1 mmHg) and polymerization was carried out for about 3 hours. The resulting polymer was forced into water in the form of strand under the pressure of nitrogen. The strand was cut into chips having an intrinsic viscosity of 0.65 to 0.75.

The barium sulfate-containing polyester chips thus obtained were made into a drawn yarn ((8.3 tex 75 denier), 36 filaments) by spinning and drawing in the usual way. The draw yarn was woven into a HABUTAE fabric (a closely woven, pure-dye fabric) composed of the same warp and filling. The fabric sample underwent desizing, relaxation scouring, and heat setting (180°C, 60 seconds) in the usual way. Then, the fabric sample was treated with a 4% NaOH solution at 95°C in the usual way until the weight of the fabric sample was decreased by 20%. The fabric sample was subjected to high-temperature dyeing (8% owf, with Dianix Navy Blue ER-FS, (registered trade-mark) made by Mitsubishi Kasei Co., Ltd.), followed by ordinary finishing. The finished fabric was examined for external appearance and feeling and handle. The specific gravity of the fiber was measured, and the surface of the fiber was observed under a scanning electron microscope.

In a comparative example, the same procedure as mentioned above was repeated except that barium sulfate was replaced by 0.5 wt% or 3 wt% of titanium oxide (having an average particle diameter of 0.2 μm, a refractive index of 2.49, and a true specific gravity of 4.20).

The results of the experiments are shown in Table 1. It is apparent from Table 1 that the fiber having a high specific gravity and surface irregularities according to this invention provides fabrics superior in appearance, drape, and feeling.

Table 1

| Fine particles | | Spin-nabi-lity | Surface irregularities | | | | Specific gravity of fiber | Appearance | | Feeling | | |
| Name | Content | | Length (μm) | Breadth (μm) | Density per 100 μm² | Pitch of recesses | | Color tone | Delus-tering | Drape | Touch | Handle |
|---|---|---|---|---|---|---|---|---|---|---|---|---|
| BaSO₄ | 20% | good | 2 - 8 | 0.3-1.6 | 17 - 30 | 1.3 μm | 1.54 | good | best | best | best | good |
| BaSO₄ | 10% | good | 2 - 8 | 0.3-1.6 | 15 - 30 | 1.3 | 1.472 | good | best | best | best | good |
| BaSO₄ | 7% | good | 2 - 9 | 0.3-1.7 | 10 - 30 | 1.8 | 1.441 | good | best | best | best | good |
| BaSO₄ | 5% | good | 2 -10 | 0.3-1.4 | 10 - 25 | 2 | 1.430 | good | good | good | best | good |
| BaSO₄ | 4% | good | 2 -10 | 0.4-1.2 | 5 - 20 | 2 | 1.425 | good | good | good | fair | good |
| Comparative Examples | | | | | | | | | | | | |
| BaSO₄ | 2% | good | 2 -10 | 0.4-1.2 | 3 - 5 | 3 | 1.405 | good | fair | fair | poor | poor |
| BaSO₄ | 30% | poor | - | - | - | - | 1.597 | Unsuccessful to prepare samples | | | | |
| TiO₂ | 3% | good | 1 - 6 | 0.3-1.5 | 10 - 20 | 1.3 | 1.420 | poor | good | fair | fair | poor |
| TiO₂ | 0.5% | good | 1 - 5 | 0.5-1.3 | 3 - 8 | 3.5 | 1.394 | good | poor | poor | poor | poor |

EP 0 227 886 B1

## EXAMPLE 2

Ethylene glycol was mixed with each of the following powders in equal quantities.

| Name of powder | Average particle diameter | Refractive index | True specific gravity |
|---|---|---|---|
| Colloidal silica | 0.045 µm | 1.56 | 2.25 |
| Alumina | 0.2 | 1.76 | 3.97 |
| Calcium carbonate | 0.08 | 1.65 | 2.93 |
| Barium sulfate | 0.60 | 1.64 | 4.49 |
| Magnesium oxide | 0.5 | 1.72 | 3.50 |
| Aluminum metaphosphate | 0.6 | 1.7 | 2.26 |
| Calcium phosphate | 0.8 | 1.7 | 3.14 |
| Calcium phosphate | 1.2 | 1.7 | 3.14 |

For complete dispersion of powder particles, the mixture was stirred by using a vibration mill as in Example 1 and further treated with ultrasonic. Incidentally, the resulting dispersion was diluted with methanol for measurement of average particle diameter. The data thus obtained are shown in the above table.

The ethylene glycol containing microfine particles was mixed with terephthalic acid and ethylene glycol in such quantities that the molar ratio of ethylene glycol to terephthalic acid is 1.5 and the content of microfine particles in the polymer is 7 wt%. After the addition of 400 ppm of $Sb_2O_3$, each mixture in the slurry form underwent esterification and polycondensation in the same way as in Example 1. The resulting molten polymer was forced directly to a spinneret by a gear pump. Drawn yarns ((8.3 tex 75 denier),24 filaments) were obtained by drawing in the usual way.

A filling-faced, 8 leaves satin weave was woven from each of the eight kinds of the polyester yarns prepared as mentioned above, as filling, and ordinary polyester filament yarns ((5.5 tex 50 denier), 36 filaments), as warp. The satin weave underwent desizing, relaxation scouring, and heat setting in the usual way. Then the satin weave was treated with an alkaline solution to decrease the weight by 25%. The satin weave samples were dyed all at once in the same batch by high temperature dyeing (12% owf, with Dianix Black HG-SE (registered trade-mark) made by Mitsubishi Kasei Co., Ltd.) by using a circular dyeing machine. The dyed fabrics were examined for appearance and feeling by organoleptic test. The results are shown in Fig. 1.

## EXAMPLE 3

the same procedure as in Example 2 was repeated except that the content of microfine particles in the polyester fiber was changed to 5 wt%. The results are shown in Fig 1.

In Fig. 1, the abscissa represents the true density of microfine particles incorporated into the polyester fiber and the ordinate represents the specific gravity of the polyester fiber containing microfine particles and having surface irregularities. The symbol ⊙ denotes those samples which are good in drape and feeling, and the symbol Δ denotes those samples which are poor in drape and feeling. The code numbers represent the name and amount of microfine particles used as follows :

| Name of powder | Average particle diameter | 7% content | 5% content |
|---|---|---|---|
| Colloidal silica | 0.045 µm | A-7 | A-5 |
| Alumina | 0.2 | B-7 | B-5 |
| Calcium carbonate | 0.08 | C-7 | C-5 |
| Barium sulfate | 0.6 | D-7 | D-5 |
| Magnesium oxide | 0.5 | E-7 | E-5 |
| Aluminum metaphosphate | 0.6 | F-7 | F-5 |
| Calcium phosphate | 0.8 | G-7 | G-5 |
| Calcium phosphate | 1.2 | H-7 | H-5 |

The two curves in Fig. 1 represent the theoretical values of the specific gravity of the fiber containing microfine particles. The actual values in Examples are lower than the theoretical ones. Presumably, this is because voids are formed by the incorporation of microfine particles. In the case of microfine particles having an average particle diameter greater than 1 µm, the resulting polyester fiber has a low specific gravity presumably due to larger voids. This is demonstrated by H-7 and H-5. It is concluded that good drape and feeling are obtained in the case where the microfine particles have an average particle diameter smaller than 1 µm and a true density higher than 2.5 and the polyester fiber has a specific gravity in excess of 1.425.

In the cases of A-7, A-5, C-7, and C-5, the surface irregularities were so small that they produced the color deepening effect but they were partly damaged, with the result that the dyed fabric looked partly whitish. A-7, A-5, and C-5 gave poor drape, but C-7 gave good drape.

the polyester fibers represented by A and C were examined for surface irregularities under a scanning electron microscope. The density of recesses was greater than 100 per 100 square micrometres.

In the cases of B-5, D-5, and E-5, the dyed fabrics were good in drape, handle, and silhouette. They produced the delustering effect, without giving rise to a whitish pastel shade. Barium sulfate (D) gave the best results among the microfine particles used.

## Claims

1. A polyester fiber having a high density and roughened surface characterized in that the fiber contains more than 4 wt% but not more than 20 wt% of microfine particles having an average particle diameter smaller than 1 µm, a refractive index lower than 2.0, and a true specific gravity higher than 2.5, has a specific gravity of 1.425 to 1.60, and has on the surface thereof minute recesses having a length smaller than 10 µm in the direction of fiber axis and a breadth of 0.3 to 2 µm in the direction perpendicular to fiber axis, with the density of the recesses being 5 to 100 per 100 square micrometres.

2. A polyester fiber having a high density and roughened surface as set forth in Claim 1, wherein the microfine particles are barium sulfate.

## Ansprüche

1. Polyesterfaser mit hoher Dichte und rauher Oberfläche, dadurch gekennzeichnet, daß die Faser mehr als 4 Gew-%, jedoch nicht mehr als 20 Gew-%, an mikrofeinen Teilchen mit einem mittleren Teilchendurchmesser unter 1 µm, einem Brechungsindex unter 2,0 und einer tatsächlichen Dichte über 2,5 enthält, eine Dichte von 1,425 bis 1,60 aufweist und an ihrer Oberfläche winzige Vertiefungen mit einer Länge unter 1O µm in Richtung der Faserachse und einer Breite von 0,3 bis 2 µm in Richtung senkrecht zur Faserachse aufweist, wobei die Dichte der Vertiefungen 5 bis 100 pro 100 µm² beträgt

2. Polyesterfaser mit hoher Dichte und rauher Oberfläche nach Anspruch 1, wobei die mikrofeinen Teilchen aus Bariumsulfat bestehen.

## Revendications

1. Une fibre de polyester ayant une haute densité et une surface rendue rugueuse, cette fibre étant caractérisée en ce qu'elle contient plus de 4 %, mais pas plus de 20 % en poids, de particules microfines ayant une granulométrie moyenne inférieure à 1 µm, un indice de réfraction inférieur à 2,0 et une densité vraie supérieure à 2,5, elle a une densité de 1,425 à 1,60 et elle a sur sa surface de petits creux ayant une longueur inférieure à 10 µm dans la direction de l'axe de la fibre et une largeur de 0,3 à 2 µm dans la direction perpendiculaire à l'axe de la fibre, la densité des creux étant de 5 à 100/100 µm².

2. Une fibre de polyester ayant une haute densité et une surface rendue rugueuse selon la revendication 1, dans laquelle les particules microfines sont en sulfate de baryum.

EP 0 227 886 B1

F I G. 1

Specific gravity of fiber containing microfine particles and having roughened surface

True specific gravity of microfine particles

7 wt% containing

5 wt% containing

1.47
1.46
1.45
1.44
1.43
1.42
1.41
1.40
1.39

2.0  2.5  3.0  3.5  4.0  4.5  5.0  5.5  6.0

B-7
D-7
C-7
G-7
E-7
F-7
B-5
D-5
A-7
H-7  E-5
C-5  G-5
A-5
F-5  H-5

◎ : Good in drape and feeling
▲ : Poor in drape and feeling
▨ : Extent of the present invention